# EUROPEAN PATENT SPECIFICATION

(11) **EP 1 241 384 B1**
(45) Date of publication and mention of the grant of the patent: **19.04.2006**
(21) Application number: 02251434.3
(22) Date of filing: 28.02.2002
(51) Int. Cl.: F16J 15/32

(54) **Brush seal**
Bürstendichtung
Joint à balai

(30) Priority: 13.03.2001 JP 2001070820
(43) Date of publication of application: 18.09.2002
(73) Proprietor: Eagle Engineering Aerospace Co., Ltd., Minato-ku, Tokyo 105-8587 (JP)
(72) Inventor: Kono, Toru c/o Eagle Engineering Aerospace Co.,Ltd, Sakado-shi, Saitama 350-0285 (JP)
(74) Representative: Feakins, Graham Allan

(56) References cited:
- EP-A- 0 293 140
- WO-A-00/47919
- WO-A-99/06673

## Description

The present invention relates to a brush seal device that seals a gap between two component members moving relative to each other while separating them from each other. More specifically, it relates to a brush seal device in which a brush seal can be attached and removed easily if there occurs a change in design specification, or a brush seal can be easily replaced with a new one if the brush seal has been abraded.

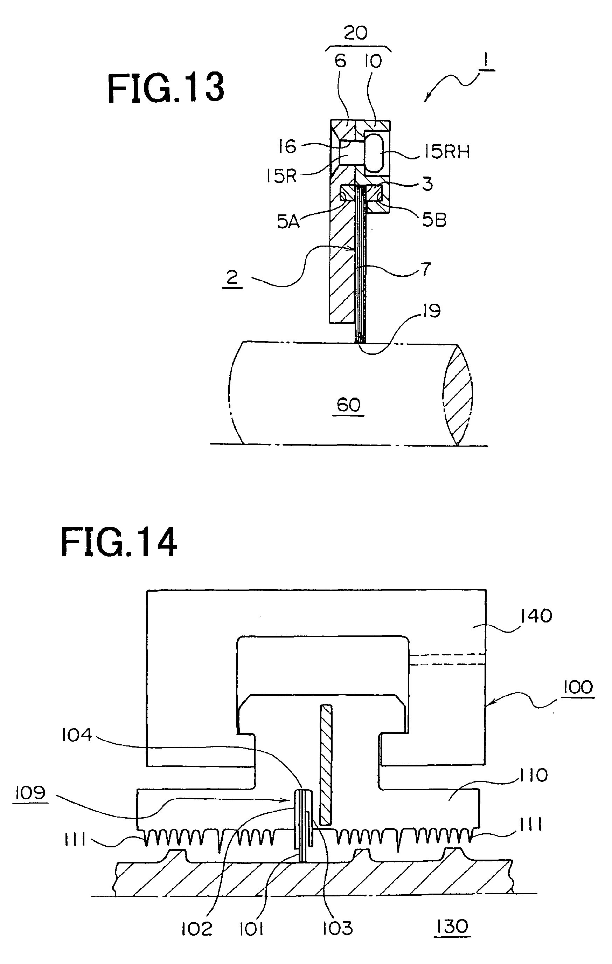

A brush seal device 100 shown in Fig. 14 is based on an art related to the present invention.

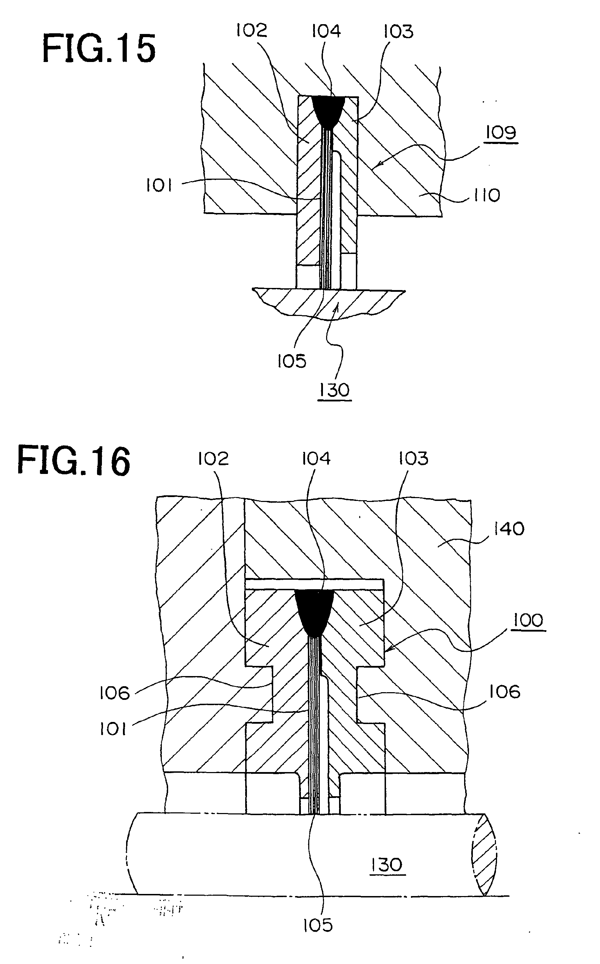

Fig. 14 shows a cross-sectional view of the brush seal device 100 that is designed to be mounted, for example, between a casing 140 and a rotor 130 of a steam turbine. Fig. 15 is an enlarged cross-sectional view of a brush seal 109 shown in Fig. 14.

In Figs. 14 and 15, the brush seal 109 is integrated with a seal segment 110. The entire construction shown in Fig. 14 is the brush seal device 100. The seal segment 110 has labyrinth seals 111 on opposed sides of the brush seal 109. The brush seal 109 and the labyrinth seals 111 cooperate with the rotor 130 and thus seal a path between the circumferentially extending casing 140 and the rotor 130 in a turbine area of the steam turbine so as to prevent leakage of steam through the path. As a result, the efficiency of the steam turbine is prevented from lowering due to leakage of steam.

The brush seal 109, which is effective in preventing leakage of steam through the path, is integrally fixed to the seal segment 110, which has complicatedly processed parts such as the labyrinth seals 111. Hence, as shown in Fig. 15, bristles 101 are sandwiched between a back plate 102 and a retaining plate 103. The bristles 101, the back plate 102, and the retaining plate 103 are integrated by being welded at a welding portion 104. The bristles 101 and outer peripheral faces of the back plate 102 and the retaining plate 103 are equal in diameter.

As shown in the cross-sectional view of Fig. 15, the bristles 101 are stacked in a direction of application of the pressure of sealed fluid, agglomerated in a wall shape, and arranged along the circumferential direction. Thus, the bristles 101 are disposed between and welded to the back plate 102 and the retaining plate 103, so that the bristles 101, the back plate 102, and the retaining plate 103 constitute an integral unit.

The bristles 101, which are large in number, cannot be easily welded to the back plate 102 and the retaining plate 103 while being positioned between them. The bristles 101 must face an outer peripheral face of the rotor 130 while protruding from an inner peripheral end face of the back plate 102 by a preset distance. Therefore, the operations of dimensioning and welding the bristles 101 are troublesome.

Both the back plate 102 and the retaining plate 103 are made from a material exhibiting high rigidity at high temperatures, such as a nickel alloy. Thus, the processing of the back plate 102 and the retaining plate 103 or the like tends to be costly. In addition, the material for the back plate 102 and the retaining plate 103 is changed depending on the field to which the brush seal device 100 is applied specifically. In other words, the necessity for a change in design specification arises every time the type of sealed fluid or the temperature to be set is changed.

Fig. 16 is a cross-sectional view of the brush seal device 100 according to still another related art.

The bristles 101 shown in Fig. 16 are substantially identical in construction to those shown in Fig. 15, except that the back plate 102 and the retaining plate 103 are provided with mounting engagement portions 106 so as to be mounted to the casing 140. The bristles 101 have the welding portion 104 formed between the back plate 102 and the retaining plate 103. Outer peripheral end portions of the bristles 101, the back plate 102, and the retaining plate 103 are integrated by being welded at the welding portion 104. Therefore, the processing of the mounting engagement portions 106 formed in the back plate 102 and the retaining plate 103 or the like is complicated. Also, it is difficult to perform welding while precisely positioning the mounting engagement portions 106 formed in the back plate 102 and the retaining plate 103 and an inner free end face 105 formed by the bristles 101.

The entire brush seal device 100 constructed as described above must be replaced with a new one if the brush seal 109 has been abraded. Therefore, it becomes inevitable to defray an enormous cost to manufacture a large number of brush seal devices 100 and replace them with new ones.

In the case of manufacturing a large number of brush seal devices 100 wherein the bristles 101, which are large in number, are disposed in a wall shape between the back plate 102 and the retaining plate 103 and attached to them by welding a metal, it is difficult to arrange the bristles 101 and attach them to the back plate 102 and the retaining plate 103. Furthermore, since the bristles 101 are integrated with the back plate 102 and the retaining plate 103 by welding, a deterioration in dimensional precision is caused. This leads to a problem of difficulties in mounting the brush seal devices 100 at right positions.

The present invention has been made in quest of a solution to the aforementioned problems. It is a technical objective of the present invention to reduce the manufacturing cost of a brush seal device by making it possible to simply replace a brush seal with a new one without the necessity of replacing a back plate and a retaining plate with new ones.

It is another technical objective of the present invention to improve the mounting precision of a brush seal device at the time of replacement by making it possible to simply replace a brush seal with a new one without the necessity of replacing a back plate and a retaining plate with new ones.

It is still another technical objective of the present invention to improve the manufacturing precision of a brush seal device by allowing a brush seal to be removed from a back plate and a retaining plate.

It is still another technical objective of the present invention to facilitate the distribution of component members by manufacturing only brush seals on a mass-production scale and reducing the number of back plates or retaining plates to be manufactured to a minimum required number.

Reference should also be made to WO 99/06673 which discloses a brush seal device having bristles.

According to the present invention, there is provided a brush seal device having bristles that are attached to one of component members moving relative to each other while being spaced from each other and that have free end faces opposed to a counter face of the other component member so as to seal a gap between the component members, comprising a mounting portion for fixing one end column portion composed of said bristles that are arranged in a wall shape; a back plate portion having one connecting portion that is detachably engaged with and securely fitted to said mounting portion and a supporting surface that supports said bristles when a pressure of sealed fluid is applied thereto; a retaining plate portion making a pair with said back plate portion and having the other connecting portion that is detachably engaged with and securely fitted to said mounting portion; and coupling means for detachably fastening said back plate portion and said retaining plate portion while sandwiching said mounting portion between said back plate portion and said retaining plate portion; characterized in that said coupling means is composed of fastening bolts and is made from a material having a smaller thermal expansion coefficient than a material for said back plate portion and said retaining plate portion; and in that said mounting portion is made from a material having a greater thermal expansion coefficient than a material for said back plate portion and said retaining plate portion.

A brush seal device according to a preferred embodiment of the present invention has bristles that are attached to one of component members moving relative to each other while being spaced from each other and that have free end faces opposed to a counter face of the other component member so as to seal a gap between the component members. This brush seal device has a mounting portion, a back plate portion, a retaining plate portion, and coupling means. The mounting portion is designed to fix one end column portion composed of the bristles that are arranged in a wall shape. The back plate portion has one connecting portion that is removably engaged with and securely fitted to the mounting portion and a supporting surface that supports the bristles when a pressure of sealed fluid is applied thereto. The retaining plate portion makes a pair with the back plate portion and has the other connecting portion that is removably engaged with and securely fitted to the mounting portion. The coupling means is designed to removably fasten the backplate portion and the retaining plate portion while sandwiching the mounting portion between the back plate portion and the retaining plate portion.

The brush seal device according to the present invention is designed such that the mounting portion connected to the bristles is removably fitted and secured to the connecting portions so as to position the brush seal. Therefore, even if slight deformation is caused in the mounting portion, it can be corrected by the connecting portions. As a result, the brush seal device can be dimensioned in such a manner as to be positioned precisely.

If the brush seal has been abraded, it can be disassembled by releasing the coupling means and can be replaced with a new one. Thereby it becomes possible to guarantee the sealing performance.

In addition, there is no need to manufacture a large number of back plate portions and retaining plate portions. Therefore, even if the back plate portion or the retaining plate portion is made from an expensive material, it can be adapted to a material having the same thermal expansion coefficient as one of the component members to which it is attached. Also, no abnormal deformation occurs in a region where the back plate portion or the retaining plate portion is attached and fitted to a corresponding one of the component members. Therefore, it becomes possible to enhance the mounting precision.

### BRIEF DESCRIPTION OF THE DRAWINGS

Fig. 1 is a cross-sectional view of a brush seal device according to a first preferred embodiment of the present invention. This cross-sectional view shows a state in which the brush seal device is mounted between a casing and a rotational shaft.
Fig. 2 is a cross-sectional view of the brush seal device shown in Fig. 1. This cross-sectional view shows a state in which the brush seal device has been disassembled into its component members.
Fig. 3 is a cross-sectional view of a brush seal device according to a first embodiment of the present invention.
Fig. 4 is a cross-sectional view of a brush seal device according to a second embodiment of the present invention.
Fig. 5 is a cross-sectional view of a brush seal device according to a third embodiment of the present invention.
Fig. 6 is a cross-sectional view of a brush seal device according to a fourth embodiment of the present invention.
Fig. 7 is a cross-sectional view of a brush seal device according to a fifth embodiment of the present invention.
Fig. 8 is a cross-sectional view of a brush seal device according to a sixth embodiment of the present invention.
Fig. 9 is a cross-sectional view of a brush seal device according to a seventh embodiment of the present invention.
Fig. 10 is a cross-sectional view of a brush seal device according to an eighth embodiment of the present invention.
Fig. 11 is a cross-sectional view of a brush seal device according to a ninth embodiment of the present invention.
Fig. 12 is a cross-sectional view of a brush seal device according to a tenth embodiment of the present invention.
Fig. 13 is a cross-sectional view of a brush seal device according to an eleventh embodiment of the present invention.
Fig. 14 is a cross-sectional view of a brush seal device according to a related art.
Fig. 15 is an enlarged cross-sectional view of the brush seal device shown in Fig. 14.
Fig. 16 is a cross-sectional view of a brush seal device according to another related art.

Hereinafter, brush seal devices according to embodiments of the present invention will be described in detail with reference to the drawings.

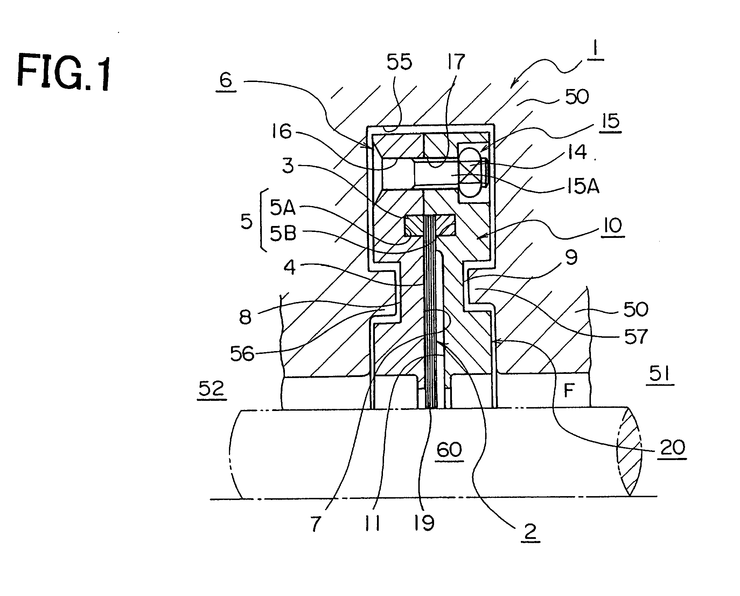

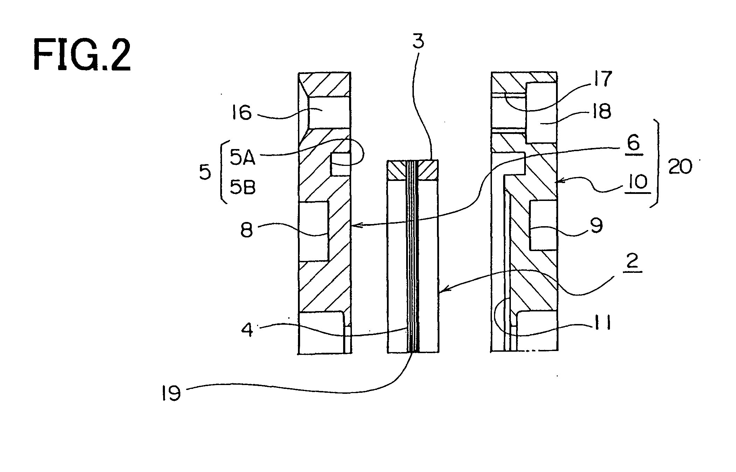

Fig. 1 is a cross-sectional view of a brush seal device 1 according to the first preferred embodiment of the present invention. This cross-sectional view shows a state in which the brush seal device 1 is mounted in a channel 55 of a casing 50 between the casing 50 and a rotational shaft 60. Fig. 2 is a cross-sectional view of the brush seal device 1 shown in Fig. 1. This cross-sectional view shows a state in which the brush seal device 1 has been disassembled into its component members.

The brush seal device 1 is shown in Fig. 1. The brush seal device 1 is fitted, for example, in the channel 55 of the casing 50, which is a part of a gas turbine.

A first stopper 56 and a second stopper 57 are formed on opposed side faces of the channel 55. The first and second stoppers 56, 57 engage the guide portions 8, 9 of the brush seal device 1 respectively, thus preventing the brush seal device 1 from being displaced by more than a predetermined distance. The brush seal device 1 serves as a partition in a hydraulic-fluid path in the casing 50 and is designed to insulate a high-pressure area 51 and a low-pressure area 52 from each other.

As shown in Fig. 2, the brush seal device 1 is mainly composed of a brush seal 2, a back plate portion 6, a retaining plate portion 10, and a coupling means 15. The brush seal 2 is mainly composed of bristles 4 and a mounting portion 3. The bristles 4 are formed by binding a multitude of steel wires into bundles and disposing the bundles in a wall shape in the circumferential direction. The mounting portion 3 is formed by integrally connecting outer peripheral end portions of the wall-shaped bristles 4 via parts on the opposed sides as shown in Fig. 2. In addition, the mounting portion 3 is formed in such a shape that it can be mounted between the back plate portion 6 and the retaining plate portion 10.

The mounting portion 3 is formed in a simple shape and thus can be mounted to a combinational unit 20 precisely. Even if the mounting portion 3 is deformed, it is fitted and applied to a pair of connecting portions 5. The connecting portions 5 correct slight deformation of the mounting portion 3, thus ensuring that the mounting portion 3 is positioned precisely. For instance, even in the case where the bristles 4 are connected by welding, subtle deformation or the like of the mounting portion 3 resulting from welding heat is corrected due to a construction in which the mounting portion 3 is mounted to the connecting portions 5. As a result, the mounting portion 3 is mounted precisely.

One of the connecting portions 5A is formed in a side face of the back plate portion 6. The connecting portion 5A is in the shape of a plate and engages the mounting portion 3. In addition, a supporting surface for supporting a fluid pressure applied from the high-pressure area 51 to the bristles 4 is formed on the other side face of the back plate portion 6, namely, on the side face opposed to the bristles 4.

Still further, the first guide portion 8 that is securely engaged with the first stopper 56 of the casing 50 is formed on the other side of the supporting surface 7. A plurality of mounting holes 16 for mounting flat-headed screws 15A acting as the coupling means 15 are arranged at equal intervals in an outer peripheral end portion. Lockingnuts 14 prevent the flat-headed screws 15A from loosening.

The other connecting portion 5B is formed in the retaining plate portion 10 that is mounted in such a manner as to facethebackplateportion6. Theotherconnectingportion 5B engages a counter side face of the retaining plate portion 10 in such a manner as to correspond to the mounting portion 3. Furthermore, a recessed surface 11 spaced from the bristles 4 is formed on the counter side face.

The second guide portion 9 is formed in the side face opposed to the counter side face. Counterbores 18 and mounting threaded-holes 17 for mounting the flat-headed screws 15A acting as the coupling means 15 are formed at positions corresponding to the mounting holes 16.

It is preferable that the combinational unit 20 composed of the back plate portion 6 and the retaining plate portion 10 be made from a nickel-based alloy. However, another material such as iron, steel, or a non-ferrous alloy can also be selected depending on the conditions regarding the field of application, such as the type of sealed fluid and the temperature. In addition, it is.also necessary to select an appropriate material depending on the thermal expansion coefficient of the casing 50.

The bristles 4 are made from steel wires, nickel-based alloy wires, ceramic wires, or the like. For instance, the bristles 4 as one embodiment of the present invention have a diameter ranging from 0.05mm to 0.51mm and a length ranging from 5mm to 50mm. In addition, the bristles 4 have a reduced width ranging from 0.51mm to 3.81mm.

It is appropriate that the material for the mounting portion 3 have a greater thermal expansion coefficient (linear expansion coefficient) than the material for the combinational unit 20. This aims at press-fitting the combinational unit 20 through expansion of the mounting portion 3, stabilizing a fixing force applied to the mounting portion 3, and applying a tensile force to the coupling means 15.

The mounting portion 3 is made from a material with a great linear expansion coefficient, for example, from a cadmium alloy, an aluminium alloy, or chrome steel. The mounting portion 3 is made from a shape-memory alloy and has a U-shaped cross-section with a slightly harrowed opening. The end portions of the bristles 4 are held in a U-shaped groove of the mounting portion 3. There is also an embodiment in which the mounting portion 3 is designed to press-fit a U-shaped connecting portion on opposed sides of the combinational unit 20 in response to a rise in temperature of the mounting portion 3. Thus, the mounting portion 3 can be connected to the combinational unit 20 and sandwich the bristles 4 in its opening.

Furthermore, the couplingmeans 15 fastens and sandwiches the brush seal 2 from opposed sides of the combinational unit 20, which is composed of the back plate portion 6 and the retaining plate portion 10. The coupling means 15 is designed as the flat-headed screws 15A. The flat-headed screws 15A are made from a material with a small linear expansion coefficient. For instance, the flat-headed screws 15A are made from steel, preferably from tungsten steel or molybdenum steel.

In general, the lower the melting point of metal becomes, the greater the linear expansion coefficient thereof becomes. Therefore, a metal having a low melting point is preferred as the mounting portion 3. The higher the melting point of metal becomes, the smaller the linear expansion coefficient thereof becomes. Therefore, a metal having a high melting point is preferred as the coupling means 15.

In consideration of the relationbetween linear expansion coefficient corresponding to melting point and the properties of sealed fluid, materials for the coupling means 15, the mounting portion 3, and the like are selected.

The brush seal device 1 constructed as described above is assembled as shown in Fig. 1. That is, the mounting portion 3 of the brush seal 2 is engaged with one of the connecting portions 5A of the back plate portion 6 as well as the other connecting portion 5B of the retaining plate portion 10 and is thereby sandwichedbetween the connecting portions 5A, 5B. The flat-headed screws 15A are screwed into the mounting threaded-holes 17, fastened, and integrated with them. The locking nuts 14 prevent the flat-headed screws 15A from loosening.

This assembling operation is carried out easily. That is, the mounting portion 3 of the bristles 4 is retained by being engaged with one of the connecting portions 5A of the back plate portion 6. The other connecting portion 5B of the retaining plate portion 10 is disposed opposite the mounting portion 3 and engaged with it. Thus, the mounting portion 3 is sandwiched between the connecting portions 5A, 5B. By fastening the mounting portion 3 by means of the flat-headed screws 15A, the assembling operation is completed. The brush seal device 1 is then mounted to the casing 50 and is thus positioned precisely with respect to the rotational shaft 60.

Free ends 19 of the bristles 4 are disposed in contact with or contiguous to the rotational shaft 60 so as to seal sealed fluid in the high-pressure area 51.

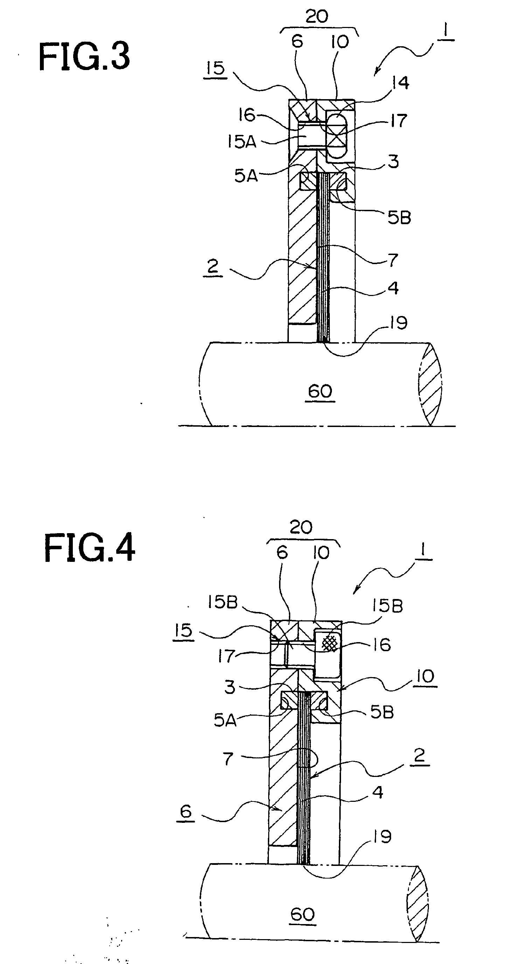

Fig. 3 is a cross-sectional view of a brush seal device according to the first embodiment of the present invention. The brush seal 2 shown in Fig. 3 is similar in construction to the brush seal 2 shown in Fig. 1. The back plate portion 6 shown in Fig. 3 is substantially identical in shape to the back plate portion 6 shown in Fig. 1 except that the first guide portion 8 is not provided. In addition, the retaining plate portion 10 is formed with a reduced length. That is, the side of the recessed surface 11 of the retaining plate 10 is cut off. The retaining plate portion 10 is formed in such a shape that sealed fluid directly acts on the bristles 4.

The mounting portion 3 of the brush seal 2 thus constructed is made from chrome steel. The bundle-like bristles 4 are sandwiched between the halves of the mounting portion 3. The mounting portion 3 is engaged with the connecting portions 5 of the back plate portion 6 and the retaining plate portion 10 and is sandwiched between them. The flat-headed screws 15A made from tungsten steel are then screwed into the mounting threaded-holes 17 and fastened, so that all the component members are integrated. The locking nuts 14 prevent the flat-headed screws 15A from loosening. It is to be noted herein that the component members shown in Figs. 4 to 13 correspond to those shown in Fig. 1.

Fig. 4 is a cross-sectional view of the brush seal device 1 according to the second embodiment of the present invention. The brush seal 2, the back plate portion 6, and the retaining plate portion 10 shown in Fig. 4 are substantially identical in construction to the brush seal 2, the back plate portion 6, and the retaining plate portion 10 shown in Fig. 3, respectively. The mounting threaded-holes 17 are formed in the back plate portion 6. The mounting holes 16 are formed in the retaining plate portion 10. Hexagon socket head screws 15B are screwed into the mounting threaded-holes 17 and fastened, whereby the component members constructed as described above are assembled into an integral unit.

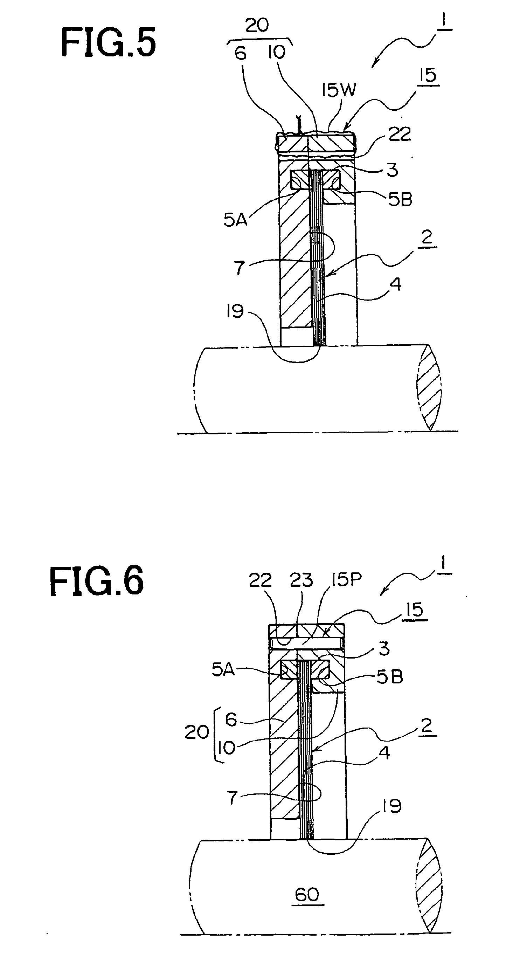

Fig. 5 is a cross-sectional view of the brush seal device 1 according to the third embodiment of the present invention. The construction shown in Fig. 5 is substantially identical to the construction shown in Fig. 4 except the brush seal device 1 and the couplingmeans 15. In the brush seal device 1 shown in Fig. 5, the coupling means 15 is fastened by a wire 15W. That is, through-holes 22 are formed at equal intervals in outer peripheral end portions of the retaining plate portion 10 and the back plate portion 6. The wire 15W is passed through the through-holes 22 and tied up, whereby the coupling means 15 is fastened. The brush seal device 1 is disassembled into its component members by cutting the wire 15W. The component members are again fastened by the wire 15W so as to be assembled into the brush seal device 1.

Fig. 6 is a cross-sectional view of the brush seal device 1 according to the fourth embodiment of the present invention. The construction shown in Fig. 6 is substantially identical to the construction shown in Fig. 5 except the wire 15W. The through-holes 22 shown in Fig. 6 have a larger diameter than the through-holes 22 that are arranged at equal intervals in the outer peripheral end portions shown in Fig. 5. A knock pin 15P is implanted in the through-holes 22 shown in Fig. 6, whereby the brush seal 2 is sandwiched between the back plate portion 6 and the retaining plate portion 10. Thus, the brush seal 2, the back plate portion 6, and the retaining plate portion 10 are integrated.

Wedge-shaped notches 23 are arranged at equal intervals along an outer periphery of a joint surface between the back plate portion 6 and the retaining plate portion 10. The back plate portion 6 and the retaining plate portion 10 can be separated from each other easily by implanting wedges in the notches 23.

The back plate portion 6 and the retaining plate portion 10 can be connected in such a manner as to clamp the bristles 4 through implantation of the pin 15P fixed to the back plate portion 6 or the retaining plate portion 10.

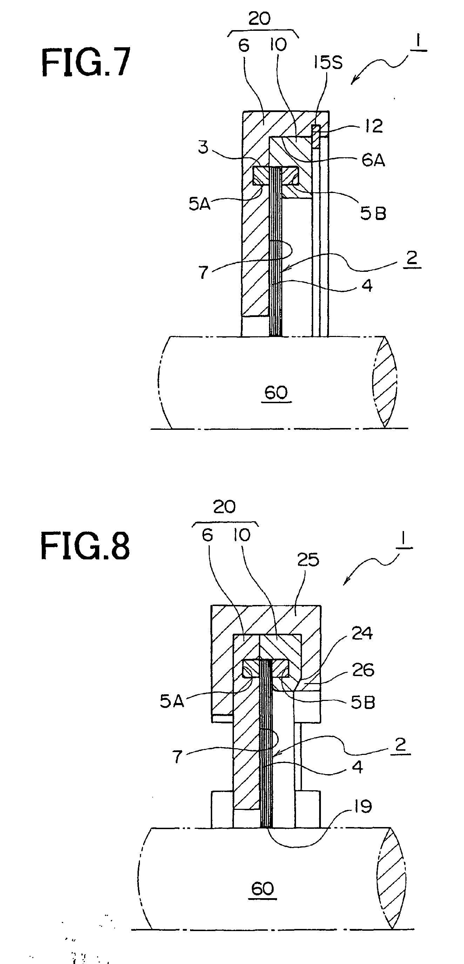

Fig. 7 is a cross-sectional view of the brush seal device 1 according to the fifth embodiment of the present invention.

In the brush seal device 1 shown in Fig. 7, the back plate portion 6 has an L-shaped cross-section. While the retaining plate portion 10 having a rectangular cross-section is fitted to an inner peripheral face 6A of the back plate portion 6, the brush seal 2 is sandwiched between the back plate portion 6 and the retaining plate portion 10. A snap ring 15S for holes is in engagement with a stop groove 12 that is formed in the inner peripheral face 6A of the back plate portion 6 so as to prevent the retaining plate portion 10 from being disengaged from the inner peripheral face 6A.

The snap ring 15S can be removed easily by being reduced in diameter toward the inner periphery. Therefore, it becomes possible to replace the brush seal 2 with another one. By engaging the mounting portion 3 of the brush seal 2 with the connecting portions 5 and hooking the snap ring 15S in the stop groove 12, a brand-new brush seal 2 can be attached to the brush seal device 1 easily.

Fig. 8 is a cross-sectional view of the brush seal device 1 according to the sixth embodiment of the present invention.

The brush seal 2, the back plate portion 6, and the retaining plate portion 10 shown in Fig. 8 are substantially identical in construction to those shown in Fig. 6 except that the through-holes 22 are dispensed with.

Outer peripheral portions of the combinational unit 20 sandwiching the brush seal 2 are connected by couplers 25 having a U-shaped cross-section. A caulking portion 26 at an inner peripheral end of the coupler 25 is caulked onto a caulking slope 24 of the retaining plate portion 10 and hooked, whereby the couplers 25 are fastened. The couplers 25 are arranged at equal intervals along the outer periphery.

In the case where the brush seal 2 is of a split type, it is obviously appropriate to form the couplers 25 into the shape of a ring, retain the outer periphery of the combinational unit 20 by the couplers 25, and caulk the couplers 25 onto the combinational unit 20 as described above.

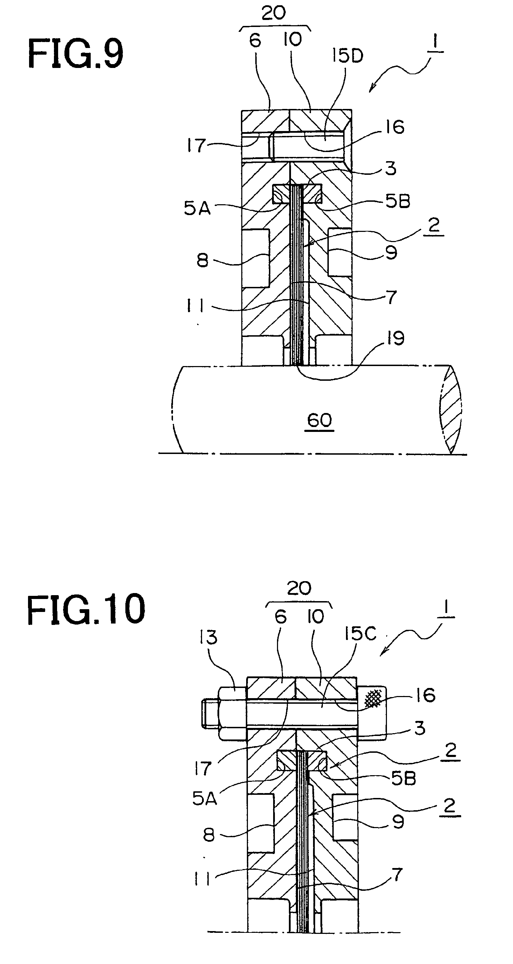

Fig. 9 is a cross-sectional view of the brush seal device 1 according to the seventh embodiment of the present invention.

The construction shown in Fig. 9 is substantially identical to the construction shown in Fig. 1 except the brush seal device 1 and the coupling means 15. In Fig. 9, flat-headed screws 15D are screwed into the mounting threaded-holes 17 formed in the back plate portion 6 to connect the back plate portion 6 and the retaining plate portion 10 together. The mounting holes 16 are formed in the retaining plate portion 10. The flat-headed screws 15D are passed through and screwed into the mounting threaded-holes 17 formed in the back plate portion 6.

Fig. 10 is a cross-sectional view of the brush seal device 1 according to the eighth embodiment of the present invention.

The brush seal device 1 shown in Fig. 10 is substantially identical in construction to the brush seal device 1 shown in Fig. 9 except the coupling means 15. The coupling means 15 shown in Fig. 10 is designed to fasten the combinational unit 20 by means of bolts 15C and nuts 13. This fastening operation is designed such that the bolts 15C made from tungsten steel are screwed into both the mounting threaded-holes 17 and the nuts 13 so as to clamp and lock the combinational unit 20. The method of fastening the brush seal device 1 is designed such that the combinational unit 20 is fastened securely by means of bolts 15c. This method is adopted, for example, if the brush seal device 1 is large in size.

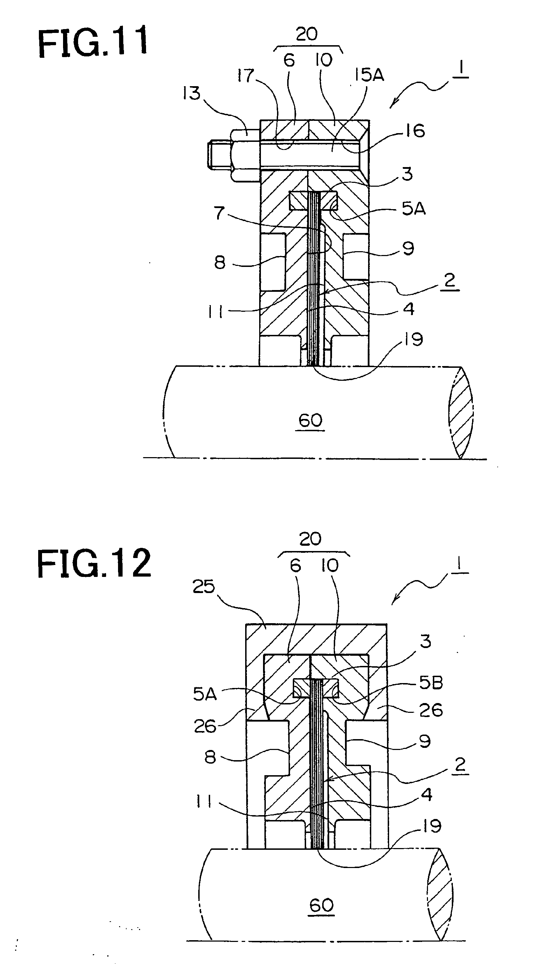

Fig. 11 is a cross-sectional view of the brush seal device 1 according to the ninth embodiment of the present invention.

In the brush seal device 1 shown in Fig. 11, the flat-headed screws 15A made from molybdenum steel are used instead of the bolts 15C shown in Fig. 10 so as to fasten the combinational unit 20. In this case as well, it is possible to tightly fasten connecting surfaces of the combinational unit 20. In fitting the brush seal device 1 according to the eighth or ninth embodiment of the present invention to the casing 50, head portions of the bolts 15C and the nuts 13 can be used as guides.

Fig. 12 is a cross-sectional view of the brush seal device 1 according to the tenth embodiment of the present invention.

The brush seal device 1 shown in Fig. 12 is substantially identical in construction to the brush seal device 1 shown in Fig. 11 except the coupling means 15. The coupling means 15 is designed such that two semicircular rings having a U-shaped cross-section are interlocked with each other and that some caulking portions 26 on the inner peripheral side are caulked onto and fastened to the caulking slope 24 of the combinational unit 20. The number of the caulking portions 26 that are arranged at equal intervals to be caulked is three or four. Therefore, if the caulking portions 26 are chipped off by a chisel, the combinational unit 20 is disassembled. As a result, if the brush seal 2 has been abraded, it can be replaced with a new one.

Fig. 13 is a cross-sectional view of the brush seal device 1 according to the eleventh embodiment of the present invention.

The brush seal device 1 shown in Fig. 13 is substantially identical in construction to the brush seal device 1 shown in Fig. 3 except the coupling means 15. The coupling means 15 is fastened by rivets 15R, which are made from stainless steel, aluminum, copper, or the like. The combinational unit 20 can be disassembled easily by cutting off easily-processible caulkedheadportions 15RH of the rivets 15R by drilling and milling.

Reassemblage of the combinational unit 20 is completed by caulking the rivets 15R while the brush seal 2 is sandwiched by the combinational unit 20. Therefore, there is no need to weld and secure the bristles 4 to the combinational unit 20 every time assemblage of the combinational unit 20 is carried out. Further, since the combinational unit 20 can be recycled, the mounting operation can be performed correctly with constant dimensional accuracy.

Other preferred embodiments of the present invention will now be described.

The brush seal device 1 according to the second preferred embodiment of the present invention is formed such that the mounting portion 3 is fixed to the pair of the connecting portions 5 and that the bristles 4 on the side of the mounting portion 3 are engaged with, sandwiched between, and retained by the back plate portion 6 and the retaining plate portion 10.

The brush seal device 1 according to the second preferred embodiment of the present invention is designed such that the mounting portion 3 integrated with the bristles 4 is fixed by the connecting portions 5 from opposed sides and that the bristles 4 are retained at their roots by the back plate portion 6 and the retaining plate portion 10. Therefore, the brush seal 2 can be mounted easily and cannot be displaced or deformed easily even if it is exposed to the pressure of sealed fluid. Moreover, it is appropriate that the mounting portion 3 be engaged with the back plate portion 6, sandwiched between the back plate portion 6 and the retaining plate portion 10, retained by the retaining plate portion 10, and fastened by the coupling means 15. Therefore, whether the brush seal 2 is of an integral type or a split type, the mounting portion 3 can be mounted precisely.

The brush seal device 1 according to the third preferred embodiment of the present invention is designed such that the coupling means 15 is composed of fastening bolts and is made from a material having a smaller thermal expansion coefficient than the material for the back plate portion 6 and the retaining plate portion 10.

The brush seal device 1 according to the third preferred embodiment of the present invention is mounted in a gas turbine or the like. Even if the back plate portion 6 and the retaining plate portion 10 are thermally expanded, their slackness can be tightened because the material for the coupling means 15 has a smaller thermal expansion coefficient than the material for the back plate portion 6 and the retaining plate portion 10.

The brush seal device 1 according to the fourth preferred embodiment of the present invention is designed such that the material for the mounting portion 3 has a greater thermal expansion coefficient than the material for the back plate portion 6 and the retaining plate portion 10.

The brush seal device 1 according to the fourth preferred embodiment of the present invention is designed such that the material for the mountingportion 3 has a greater thermal expansion coefficient than the material for the back plate portion 6 and the retaining plate portion 10. Therefore, even if the temperature rises, the mounting portion 3 is press-fitted to the back plate portion 6 and the retaining plate portion 10 so that the brush seal 2 is prevented from being slackened. As a result, the mounting position of the brush seal 2 canbe prevented frombecoming discordant with the mounting positions of other component members (e.g., the rotational shaft 60).

In the brush seal device according to the present invention, the mounting portion of the brush seal is securely fitted to the connecting portion of the back plate portion and the connecting portion of the retaining plate portion, and is connected to them by means of the coupling means, which is removably designed. Therefore, if the brush seal has been abraded, it can be replaced easily with a new one by releasing the coupling means. Besides, since the mounting portion is securely fitted, the brush seal can be positioned precisely. The brush seal device according to the present invention achieves this effect.

Further, since the combinational unit and the brush seal can be removed from each other, the combinational unit can be designed in such a manner as to be adapted to the type of the material from which the casing is made and the conditions concerning heat, corrosion, and the like. At the same time, the brush seal can be designed in such a manner as to improve the overall performance under conditions different from those for the combinational unit. The brush seal device according to the present invention achieves this effect.

In addition, since the bristles and the mounting portion are a combination of single articles, they can be connected to each other mechanically. When they are connected, no inconvenience based on welding heat or the like is caused. Even if slight deformation is caused in the bristles and the mounting portion, it is corrected by the connecting portions. In addition, the construction in which only the brush seal can be replaced makes it unnecessary to replace the combinational unit, which is expensive. Therefore, the cost of the combinational unit can be reduced. The brush seal device according to the present invention achieves this effect.

Still further, the construction in which the mounting portion of the brush seal is engaged precisely with the pair of the connecting portions so as to assemble the brush seal device ensures that the mounting portion and the connecting portions are positionedprecisely and that there is no need to replace the combinational unit. Therefore, the brush seal and the rotational shaft can also be positioned precisely as a matter of course. As a result, the mounting operation and replacement of the brush seal can be performed easily.

Further, if the brush seal device of the present invention is applied to a gas turbine or the like, the coupling means is slackened owing to thermal effects. However, slackness between the component members can be prevented effectively because one of them generates a pressing force due to a difference in thermal expansion coefficient.

## Claims

1. A brush seal device (1) having bristles (4) that are attached to one of component members moving relative to each other while being spaced from each other and that have free end faces opposed to a counter face of the other component member so as to seal a gap between the component members, comprising: a mounting portion (3) for fixing one end column portion composed of said bristles that are arranged in a wall shape;
a back plate portion (6) having one connecting portion that is detachably engaged with and securely fitted to said mounting portion (3) and a supporting surface (7) that supports said bristles (4) when a pressure of sealed fluid is applied thereto;
a retaining plate portion (10) making a pair with said back plate portion (6) and having the other connecting portion (5A,5B) that is detachably engaged with and securely fitted to said mounting portion; and
coupling means (15) for detachably fastening said back plate portion (6) and said retaining plate portion (10) while sandwiching said mounting portion (3) between said back plate portion (6) and said retaining plate portion (10); **characterised in that** said coupling means (15) is composed of fastening bolts (15A, 15B) and is made from a material having a smaller thermal expansion coefficient than a material for said back plate portion (6) and said retaining plate portion (10); and **in that**
said mounting portion (3) is made from a material having a greater thermal expansion coefficient than a material for said back plate portion (6) and said retaining plate portion (10).

2. A brush seal device according to claim 1, wherein
said mounting portion (3) is fixed to said one connecting portion (5A) and said other connecting portion (5B), and
the bristles (4) on the side of the mounting portion (3) are formed in such a shape as to be engaged with, sandwiched between, and retained by the back plate portion (6) and the retaining plate portion (10).

## Patentansprüche

1. Bürstendichtungsvorrichtung (1) mit Borsten (4), die an einem von mehreren Bauteilen angebracht sind, die sich relativ zueinander bewegen, während sie voneinander beabstandet sind, und die freie Endflächen aufweisen, die einer Gegenfläche des anderen Bauteils gegenüberliegen, dergestalt, dass ein Spalt zwischen den Bauteilen abgedichtet wird, umfassend:
einen Montageabschnitt (3) zum Befestigen eines Endsäulenabschnitts, der aus den Borsten besteht, die in einer Wandgestalt angeordnet sind;
einen Rückplattenabschnitt (6) mit einem Verbindungsabschnitt, der lösbar mit dem Montageabschnitt (3) in Eingriff steht und fest an dem Montageabschnitt (3) angebracht ist, und mit einer Stützfläche (7), welche die Bürsten (4) stützt, wenn ein Druck von abgedichtetem Fluid daran angelegt wird;
einen Halteplattenabschnitt (10), der mit dem Rückplattenabschnitt (6) ein Paar bildet und den anderen Verbindungsabschnitt (5A, 5B) aufweist, der lösbar mit dem Montageabschnitt in Eingriff steht und fest an dem Montageabschnitt angebracht ist; und
ein Kopplungsmittel (15) zum lösbaren Befestigen des Rückplattenabschnitts (6) und des Halteplattenabschnitts (10), während der Montageabschnitt (3) zwischen dem Rückplattenabschnitt (6) und dem Halteplattenabschnitt (10) angeordnet ist; **dadurch gekennzeichnet, dass**
das Kopplungsmittel (15) aus Befestigungsbolzen (15A, 15B) besteht und aus einem Material hergestellt ist, das einen kleineren Wärmeausdehnungskoeffizienten aufweist als ein Material für den Rückplattenabschnitt (6) und den Halteplattenabschnitt (10); und dass
der Montageabschnitt (3) aus einem Material hergestellt ist, das einen größeren Wärmeausdehnungskoeffizienten aufweist als ein Material für den Rückplattenabschnitt (6) und den Halteplattenabschnitt (10).

2. Bürstendichtungsvorrichtung nach Anspruch 1, wobei
der Montageabschnitt (3) an dem einen Verbindungsabschnitt (5A) und dem anderen Verbindungsabschnitt (5B) befestigt ist und
die Bürsten (4) auf der Seite des Montageabschnitts (3) so geformt sind, dass sie durch den Rückplattenabschnitt (6) und den Halteplattenabschnitt (10) in Eingriff genommen sind, zwischen dem Rückplattenabschnitt (6) und dem Halteplattenabschnitt (10) angeordnet sind und durch den Rückplattenabschnitt (6) und den Halteplattenabschnitt (10) festgehalten werden.

## Revendications

1. Dispositif d'étanchéité à balai (1) comportant des crins de brosserie (4) qui sont fixés à l'un des éléments constitutifs se déplaçant l'un par rapport à l'autre tout en étant distants l'un de l'autre et qui présentent des faces d'extrémités libres opposées à une face antagoniste de l'autre élément constitutif de façon à rendre hermétique un espace entre les éléments composants, comportant :
une partie de fixation (3) servant à fixer une partie de colonne d'extrémité composée desdits crins de brosserie qui sont disposés suivant une configuration de paroi ;
une partie de plaque arrière (6) comportant une portion de raccordement qui est engagée de façon amovible avec et adaptée de façon sûre à ladite partie de fixation (3) et une surface de support (7) qui supporte lesdits crins de brosserie (4) lorsqu'une pression de fluide enfermé de façon étanche leur est appliquée ;
une partie de plaque de retenue (10) formant une paire avec ladite partie de plaque arrière (6) et comportant l'autre portion de raccordement (5A, 5B) qui est engagée de façon amovible avec , et fixée de façon sûre à ladite partie de fixation ; et
des moyens de couplage (15) pour fixer de façon amovible ladite partie de plaque arrière (6) et ladite partie de plaque de retenue (10) tout en prenant en sandwich ladite partie de fixation (3) entre ladite partie de plaque arrière (6) et ladite partie de plaque de retenue (10) ; **caractérisé en ce que**
lesdits moyens de couplage (15) sont composés de boulons de serrage (15A, 15B) et sont constitués d'un matériau présentant un coefficient de dilatation thermique plus faible que celui d'un matériau destiné à ladite partie de plaque arrière (6) et à ladite partie de plaque de retenue (10) ; et **en ce que**
ladite partie de fixation (3) est constituée d'un matériau présentant un coefficient de dilatation thermique plus grand que celui d'un matériau pour ladite partie de plaque arrière (6) et ladite partie de plaque de retenue (10).

2. Dispositif d'étanchéité à balai selon la revendication 1, dans lequel :
ladite partie de fixation (3) est fixée à ladite première portion de raccordement (5A) et à ladite autre portion de raccordement (5B), et
les crins de brosserie (4) sur le côté de la partie de fixation (3) sont formés suivant une configuration telle qu'ils s'engagent avec, et sont pris en sandwich entre, et retenus par, la partie de plaque arrière (6) et la partie de plaque de retenue (10).
